(19)

**Europäisches Patentamt**
**European Patent Office**
**Office européen des brevets**

(11)  **EP 3 929 537 B1**

(12)  **EUROPEAN PATENT SPECIFICATION**

(45) Date of publication and mention
of the grant of the patent:
**26.07.2023   Bulletin 2023/30**

(21) Application number: **20181538.8**

(22) Date of filing: **23.06.2020**

(51) International Patent Classification (IPC):
***G01D 5/14*** *(2006.01)*

(52) Cooperative Patent Classification (CPC):
**G01D 5/145; G01D 3/08; G01F 15/007**

(54)  **ENCODER FOR A FLUID DISPENSING SYSTEM AND METHOD OF OPERATING SAME**

CODIERER FÜR EIN FLÜSSIGKEITSABGABESYSTEM UND VERFAHREN ZUM BETRIEB DAVON

CODEUR POUR UN SYSTÈME DE DISTRIBUTION DE FLUIDE ET SON PROCÉDÉ DE
FONCTIONNEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.12.2021   Bulletin 2021/52**

(73) Proprietor: **TE Connectivity Germany GmbH
64625 Bensheim (DE)**

(72) Inventors:
• **MEISENBERG, Armin
44227 Dortmund (DE)**
• **BARTOS, Axel
45731 Waltrop (DE)**

(74) Representative: **Grünecker Patent- und
Rechtsanwälte
PartG mbB
Leopoldstraße 4
80802 München (DE)**

(56) References cited:
**WO-A2-98/14759          DE-A1-102005 016 374
US-A1- 2011 148 399**

**Description**

The present invention relates to an encoder for a fluid dispensing system and to a corresponding method of operating an encoder for a fluid dispensing system. The present invention relates generally to fluid distribution systems, and more particularly, to encoders for measuring the output of fluid distribution systems.

Fluid distribution systems often implement encoders to measure quantities of distributed fluid. These encoders generally mate to a fluid metering device, by way of example, to a shaft of a piston meter, and operate to calculate the amount of distributed fluid by measuring the number of cycles or rotations of the piston meter.

Traditional encoders may be mechanically disabled, preventing the fluid distribution system from accurately measuring the quantity of dispensed fluid. For example, a thief may mechanically disconnect the encoder from the piston meter in a fuel distribution system while leaving the encoder electronically connected to the system. Such a modification would allow the continued output of for instance fuel. However, the encoder-piston arrangement disconnected, the system would fail to accurately detect the volume of fuel distributed, as well as the corresponding payment owed therefore.

Furthermore, it is known to use magnet-based encoders. Such magnet-based encoders typically operate by mechanically affixing a magnet to the rotatable shaft and having a sensor positioned relative to the magnet on the shaft.

Such magnet-based encoders can be tampered with by bringing strong disturbing magnets close to the sensor unit. In particular, by introducing a high flux density magnetic field, such as by activating an electromagnet or placing a strong permanent magnet near the fuel distribution system, one may disrupt the magnetic sensor of the encoder from accurately reading the change in the direction of the magnetic field caused by the rotating magnet, and thus may avoid paying the fair value of the distributed fuel.

Designs for a fuel distribution system that avoid vandalism, tampering, or theft may be limited by the operating environment of the system. In particular, encoders are generally located within the cabinet of a fuel distribution system. These systems are designed to be highly ventilated to allow leaked or spilled fuel to efficiently evaporate. This ventilation, however, allows for continued presence of fuel vapors around the encoders, limiting viable design options. For example, designs may avoid switches due to the risk of an electrical arc that may cause fuel vapors to ignite.

Similarly, designs may avoid various mechanical interactions due to the risk of sparks caused by friction igniting fuel vapors.

Generally, magnetoresistive sensors (also referred to in this application as magnetic sensors) measure the direction of magnetic fields. Such arrangements and methods find use in the art of determining angles and positions in the context of magnetic field sensors, particularly those utilizing magnetoresistive effects.

The sensors make use of the magnetoresistive effect, which is the tendency of a material (e. g. ferromagnetic) to change the value of its electrical resistance in an externally applied magnetic field. In particular, in multicomponent or multilayer systems (e.g. magnetic tunnel junctions), giant magnetoresistance (GMR), tunnel magnetoresistance (TMR), colossal magnetoresistance (CMR), and extraordinary magnetoresistance (EMR) are observed, while the anisotropic magnetoresistive effect (AMR) needs only one layer to occur.

The externally applied field can be generated by a permanent magnet, which is an object made from a material that is magnetized creating its own persistent magnetic field. In the case of a magnetic sensor, detecting a rotational angle of a rotary member, the permanent magnet is attached to the rotary member connected to a rotating axis and the sensor element is opposing the magnet. Since the field induced by the permanent magnet is time invariant, the direction of the magnetic field is only determined by the orientation of the rotating component relative to the sensing element.

As this is generally known, magnetoresistance is the property of a material to change the value of its electrical resistance when an external magnetic field is applied to it. The electrical output signal depends on the angle between the current flowing through the resistor and the direction of the sensor magnetization caused by the permanent magnet. In other words, MR sensors are sensitive towards the magnetic field direction, and the measured angle is a function of the current and the magnetization.

Magnetic sensors provide an outstanding accuracy as well as a high robustness against challenging environmental conditions and play an important role in various applications such as manufacturing and transportation applications. In more detail, magnetoresistive (MR) sensors are important components because of their low intrinsic measurement error and high stability. Additionally, the favorable temperature characteristic as well as the robustness against harsh environmental conditions leads to the relevance of magnetoresistive sensors in many important applications.

US2011148399 relates to an encoder to be mounted to a shaft extending from a piston meter configured to compute a volume of distributed fluid includes a magnet affixed to the shaft via a floating magnet holder, a magnetic sensor configured to sense the flux density and direction of a magnetic field created by the magnet and to output a signal indicating the flux density and direction of the magnetic field to a printed circuit board, and the printed circuit board configured to output a signal indicating the volume of distributed fluid if the encoder has not been tampered with and configured to output an error signal if the encoder has been tampered with.

A need remains, however, for an encoder that is tamper-resistant in many respects and is adapted to accurately operate in a highly combustible environment. Advantageously, the encoder can be fabricated economically. Further, it is desirable that the encoder can be designed small size to fit space requirements of the envisaged application.

At least one of these objectives is solved by the subject matter of the independent claims. Advantageous embodiments of the present invention are the subject matter of the dependent claims.

The present invention is based on the idea to use two magnetoresistive sensing elements and evaluate their output signals in view of the absolute strength of the magnetic field and in view of the presence of a stray magnetic field. Thus, the encoder is able to detect a lost connection to the magnet as well as a tampering disturbing magnetic field.

In the present disclosure, the following terms will be used in connection with the magnetic encoder.

A "magnetic sensor" is a component which evaluates the magnetic field of a rotating permanent magnet. The magnetic sensor according to the present disclosure comprises a pair of magnetic sensing elements.

A "magnetic sensing element" is a component that generates an output signal indicative of the angle $\omega$ between the magnetic field and the sensing element, and indicative of the magnetic field strength. The magnetic sensing element may advantageously be a magnetoresistive element, but of course also the use of a Hall sensor element is possible.

For the particular embodiment of a magnetoresistive magnetic sensing element, a magnetic sensing element may comprise a plurality of magnetoresistive elements connected as two separate Wheatstone bridges: a first "sensor bridge" and a second "sensor bridge". The first sensor bridge and the second sensor bridge are arranged on a circuit carrier and are rotated with respect to each other by 45°. Consequently, for a rotating permanent magnet, the output signals (as a function of the magnetic field angle) of the first and the second sensor bridge are offset by 45° ($\pi/4$). It is defined that the first sensor bridge yields a "cosine signal" $U_{cos}$, and the second sensor bridge yields a "sine signal" $U_{sin}$. The sine and cosine signal may have a periodicity of 180°.

The following equations apply for the cosine and sine signals of each sensing element comprising a Wheatstone bridge of resistors sensitive to magnetic fields:

$$U_{sin}(\omega) = \frac{1}{2}\frac{\Delta R}{R} U_{supply} \sin(2\omega) \qquad (1)$$

$$U_{cos}(\omega) = \frac{1}{2}\frac{\Delta R}{R} U_{supply} \cos(2\omega) \qquad (2)$$

The ratio $\Delta R/R$ represents the resistance change and is dependent on the magnetic field and the temperature, and $\omega$ is the angle of the rotating permanent magnet.

Consequently, from the ratio of the sine and cosine signals, the angle $\omega$ can be calculated for each sensing element as follows:

$$\omega = \frac{1}{2} arctan\left(\frac{U_{sin}}{U_{cos}}\right) \qquad (3)$$

Furthermore, the amplitude $\Delta R/R$ has a constant value and is a non-linear function of the absolute magnetic field strength. In the following, this ratio is also termed the "amplitude". From equations (1) and (2) follows:

$$\frac{\Delta R}{R} U_{supply} = \sqrt{U_{sin}^2 + U_{cos}^2} \qquad (4)$$

In particular, the present disclosure provides an encoder for a fluid dispensing system, the encoder comprising a magnetic sensor for detecting a rotational angle of a rotary member around an axis of rotation, and a magnet for generating a magnetic field, the magnet being arranged on the rotary member so that the magnetic poles generate a magnetic field perpendicular to the axis at the magnetic sensor about which the rotary member rotates. Usually the magnet is a permanent magnet. However, also an electromagnet can be used.

The magnetic sensor comprises at least a first and a second magnetic sensing element configured to generate first and second output signals, respectively, which are indicative of a sensed magnetic field associated at least in part with the magnet, wherein the magnetic sensing elements and the magnet are arranged at predetermined distances from one another centered on the axis of rotation.

The encoder further comprises a controller responsive to the first and second output signals and configured to generate an encoder signal indicative of the rotational angle, wherein the controller is further configured to compare at least one of the first and second output signals to a first and/or a second predetermined threshold value, respectively, associated with the predetermined distance, to calculate field angles of the first signals.

The controller is further operable to calculate a difference of the field angles "seen" by each of the magnetic sensing elements, and to compare the difference with a third predetermined threshold value. The controller is further configured to generate an error signal if a result of at least one of the comparisons to the predetermined threshold values indicates a tamper attempt. For detecting a lost connection to the magnet, only one of the signals of the magnetic sensing elements has to be evaluated. Using both sensing elements leads to a higher safety due to redundancy. Moreover, it should be noted that due to the different distances between the magnet and the sensing element, the threshold values usually are slightly different.

This solution has the advantage that on the one hand, a lost connection with the magnet can be identified, and on the other hand, a strong disturbing magnetic field can be detected. If these effects are caused by a tampering attempt, same can be prevented efficiently. Moreover, also operational problems, such as a too large air gap between the magnet and the sensor, or a strongly interfering stray field can be identified and taken care of.

According to an advantageous aspect of the present disclosure, the encoder signal is a pulse signal indicative of the number of revolutions of the rotary member around the axis of rotation. Thus, by counting the pulses the dispensed volume can be determined. This is a particularly robust and efficient way of metering the dispensed fluid volume.

According to a further advantageous aspect, the magnet is configured to be mounted on a magnet holder connected to the rotary member, wherein the magnet holder is enclosed by a housing which at least partly encompasses the rotary member. Thereby, leakage of liquid or liquid vapours can effectively prevented because no movable parts have to extend beyond the housing. Moreover, the required space can be kept particularly small.

In order to stop the dispensing of the fluid in case either the magnet is too far away from the sensor or there is a too large disturbing magnetic field, the error signal may be operative to disable the fluid dispensing system.

According to the invention, the first predetermined threshold value corresponds to a minimal strength of the magnetic field sensed by the first and the second magnetic sensing elements. Thus, it can be detected in an efficient manner if the coupling between the magnet and the magnetic sensor is lost. This can be due to operational problems, such as a too large air gap, or the consequence of a tampering action. For magnetoresistive sensing elements, each magnetic sensing element may comprise two sensor bridges, the first sensor bridge outputting a cosine signal $U_{cos}$ and the second sensor bridge outputting a sine signal $U_{sin}$. The strength of the magnetic field represented by the magnetic field dependent sensor output voltage may for instance be calculated based on equation (4) above, so that the comparison is done according to the following relation, wherein $U_{cos}$ and $U_{sin}$ are the output voltage of the first sensing element,

$$\sqrt{(U_{sin}^2 + U_{cos}^2)} < limit_1$$ for the first sensing element, and $$\sqrt{(U_{sin}^2 + U_{cos}^2)} < limit_2$$ for the second sensing element

Furthermore, the third predetermined threshold value corresponds to a maximum admissible magnetic field angle difference sensed by the first and the second magnetic sensing elements. Thus, the third predetermined threshold value mirrors a maximum admissible disturbing magnetic field. In particular, if the field angles measured by the first and the second magnetic sensing element differ from each other by more than a third predetermined threshold value, it can be determined that an unacceptably high disturbing magnetic field is present. In case of a magnetoresistive magnetic sensing element, the field angles $\omega_1$ and $\omega_2$ are calculated using equation (3) above.

Thus, the two most often encountered techniques of tampering with a magnetic metering unit in a fluid distribution system can be counteracted effectively.

According to an advantageous embodiment, the magnet comprises a diametrically magnetized permanent magnet having the shape of a disc, block, ring, or assembly of several magnet pieces. However, it is clear that any other suitable form of a permanent magnet can be used. Furthermore, also electromagnets can be used as a magnetic field source on the rotary member.

The permanent magnet may for instance comprise a sintered rare earth material, preferably NdFeB or SmCo, or a ferrite material, or a combination of such materials. The permanent magnet may obey a special magnetization, which concentrates and homogenizes the magnetic field at the positions of the sensing elements.

Advantageously, the first and second magnetic sensing elements may comprise magnetoresistive field angle sensors, which comprise at least two Wheatstone bridges that deliver sinusoidal output values as a function of the rotational angle of the magnet. In more detail, the magnetic field generated by the permanent magnet is determined by the distance to the sensing elements. In particular, the first sensor being connected by a first channel to a processor is used to determine a first field strength and field direction of the permanent magnet field at a first distance to the magnet, wherein the first sensor is arranged on the axis of rotation. Additionally, the second sensor being connected by a second channel to the processor, the second sensor also being arranged on the axis of rotation, is used to determine a second field strength and direction of the permanent magnet field at a second distance to the magnet. Thus, both sensors determine angular data representing the same angle of rotation of the rotary member.

In an external magnetic disturbing field is present, its disturbing influence increases with decreasing field strength at the sensor and vice versa. This leads to a difference in the measured field angles at both sensors. Measuring the magnetic field strength generated by the permanent magnet at two positions, wherein at these two positions the field density is different and measuring at both positions the field angle, enables to calculate the magnetic stray field influence generated by a disturbing source that is interfering the field of the permanent magnet, and thus, the influence of the stray field can be compensated.

Usually, it can be assumed that the distance between the disturbing source and the assembly is larger than the dimensions of the assembly. This assumption generally holds particularly true if the sensor assembly is compact and thus the field vectors of the magnetic stray field are homogenously, i.e. the field vectors of the stray field are parallel and the density of said field vectors is constant at the positions of both sensors. Based on this assumption, the strength of the disturbing source can be easily calculated. In more detail, the both sensors measure two different resulting magnetic fields, namely the field generated by the assembly, i.e. the field of the permanent magnet, which is predefined, and the interfering stray field generated by the disturbing source, which strength can be calculated based on the above assumption.

According to the present disclosure, the influence of the disturbing field can be compensated if the disturbing field is small enough that it can be attributed to regular operational and environmental conditions. However, if the measured disturbing field strength exceeds a predetermined threshold value, it can be assumed that the situation is not acceptable and may relate to a tampering attempt using a strong magnet. In such a case, the controller may cause the fuel dispensing process to stop.

The present disclosure further relates to a method operating an encoder for a fluid dispensing system, the method comprising the steps of:

sensing a magnetic field generated at least in part by a magnet operatively associated with a rotatable output shaft of a fluid metering device with a magnetic sensor, the magnetic sensor comprising at least a first and a second magnetic sensing element configured to generate first and second output signals, respectively, which are indicative of a sensed magnetic field associated at least in part with the magnet, wherein the magnetic sensing elements and the magnet are arranged at predetermined distances from one another centered on the axis of rotation;

based on the first and second output signals, generating encoder signal indicative of the rotational angle;

comparing the first and second output signals to a first and a second predetermined threshold value associated with the predetermined distance, in order to check if the magnet is at its defined position;

calculating field angles from the signals of the first and the second sensing elements, calculating a difference of the field angles, and comparing the difference with a third predetermined threshold value;

generating an error signal if a result of at least one of the comparisons to the first and second predetermined threshold values indicates a tamper attempt.

The first predetermined threshold corresponds to a minimal strength of the magnetic field sensed by the first and the second magnetic sensing elements. If the strength of the magnetic field is below this minimal value, it can be assumed that the contact to the moving permanent magnet has been lost. This may be due to an unacceptably large air gap or do to a tampering attempt. In particular, the step of comparing at least one of the first and second output signals to the first and/or second predetermined threshold values may comprise calculating an amplitude of the two output signals as the square root of a sum of the squared cosine and sine signals as explained above, and comparing the amplitude to the predetermined threshold value.

On the other hand, the third predetermined threshold value corresponds to a maximum admissible disturbing magnetic field sensed by the first and the second magnetic sensing elements. Such a situation may indicate the presence of a strong magnet used in a tampering attempt.

However, a disturbing magnetic field sensed by the first and the second magnetic sensing elements can be compensated calculatively, if the disturbing magnetic field is below the maximum admissible disturbing magnetic field. Disturbing fields interfering with the magnetic field of the permanent magnet can significantly influence the measurement, which may have effects on accuracy of the measurement and the safety of the application. Hence, according to the present disclosure, disturbing fields which lie below a certain threshold value, but still may significantly deteriorate the accuracy of the encoder, are compensated by calculation. According to an advantageous embodiment, the disturbing fields can be detected and corrected.

The accompanying drawings are incorporated into the specification and form a part of the specification to illustrate several embodiments of the present invention. These drawings, together with the description, serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. Further features and advantages will become apparent from the following more particular description of the various embodiments of the invention as illustrated in the accompanying drawings, in which like references refer to like elements, and wherein:

**FIG. 1**   is a schematic sectional view of an encoder arrangement according to a first aspect of the present disclosure;

**FIG. 2**   is a perspective view of the encoder arrangement of FIG. 1;

**FIG. 3**   is a schematic diagram of an encoder arrangement illustrating the magnetic field strength;

**FIG. 4**   is a vector diagram of the magnetic fields under the influence of a disturbing magnetic field;

**FIG. 5**   is a schematic perspective view of an encoder under the influence of a disturbing tampering magnet;

**FIG. 6**   is a sectional view of the arrangement of FIG. 5;

**FIG. 7**   is a flow chart illustrating the process of monitoring the presence of the permanent magnet and the strength of a disturbing magnetic field;

**FIG. 8**   is a schematic top view of a magnetic sensing element according to an advantageous aspect of the present disclosure;

**FIG. 9**   is a circle diagram illustrating the output signal of the magnetic sensor;

**FIG. 10**   is a diagram showing the signal amplitude as a function of the field angle and the temperature;

**FIG. 11**   is schematic magnetic field vector diagram illustrating the effect of a disturbing magnetic field;

**FIG. 12**   is a diagram showing the magnetic field on axis as a function of the distance to the permanent magnet;

**FIG. 13**   is a diagram showing the angular difference as a function of the measurement field angle relative to a disturbing field angle;

**FIG. 14**   is a diagram showing the angular difference as a function of the external disturbing field strength.

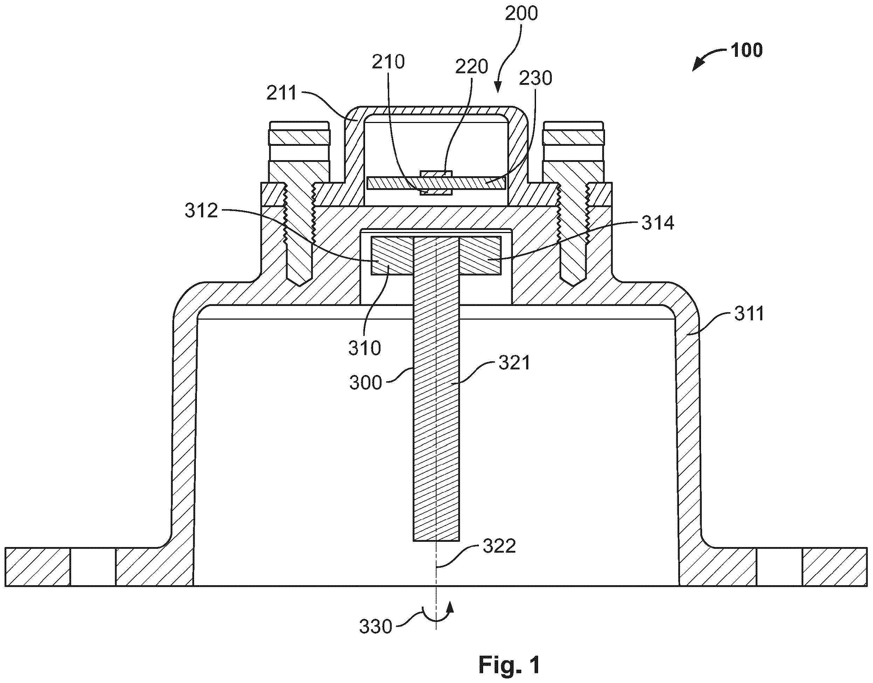

The present invention will now be explained in more detail with reference to the Figures. Referring to Fig. 1, a schematic view of an encoder arrangement is shown for a fluid dispensing system, the encoder 100 having a magnetic sensor 200 detecting a rotational angle of a rotary member 300.

The magnetic sensor 200 comprises a first magnetic sensing element 210 and a second magnetic sensing element 220. The first magnetic sensing element 210 and the second magnetic sensing element 220 are connected to a circuit board 230, for example a printed circuit board (PCB).

The rotary member 300 comprises a permanent magnet 310 attached to a holder 321 that can be connected to a rotating shaft (not visible in the Figure). The rotary member rotates around an axis of rotation 322, indicated by arrow 330. The permanent magnet 310 is for instance diametrically magnetized in a direction extending from the axis of rotation 322 thereby forming a magnetic south pole 312 and a magnetic north pole 314.

The first and second sensing element 210, 220 and the permanent magnet are arranged on the axis of rotation 322. The first and second sensing elements 210, 220 are extending in a plane perpendicular to the axis of rotation 322. The first and second sensing elements 210, 220 are arranged apart from the magnet 310 at a predetermined distance and the first sensing element 210 is spaced apart from the second sensing element 220 at a predetermined distance. According to an advantageous aspect of the present disclosure, the first and second sensing elements 210, 220 comprise magnetoresistive angle sensors which reliably and precisely detect the magnetic field direction, independently on the actual magnetic field strength. Consequently, air gap variations from mechanical tolerances can be disregarded if they remain within predefined limits. Therefore, the magnet can be located inside a housing 311 which is attached to the pump. The housing 311 is fabricated from a non-magnetic material, e. g. aluminum.

In the following, the term "xMR" will be used to signify any of the possible magnetoresistive sensors, such as for instance giant magnetoresistance (GMR), tunnel magnetoresistance (TMR), colossal magnetoresistance (CMR), extraordinary magnetoresistance (EMR), or anisotropic magnetoresistive (AMR) sensors.

As can be seen from Fig. 1, the permanent magnet 310 is arranged within the housing 311 that encompasses the magnet holder 321. Consequently, no rotating parts have to be arranged outside the housing 311 which can be screwed tightly onto the remainder of the fuel dispensing system (not shown in the figures). Accordingly, the safety of the arrangement can be enhanced. Furthermore, the space that is needed can be reduced significantly. As schematically illustrated in Fig. 1, the magnetic sensor 200 further comprises a sensor casing 211, which protects the first and second sensing elements 210, 220 and all other components that are arranged on the PCB 230.

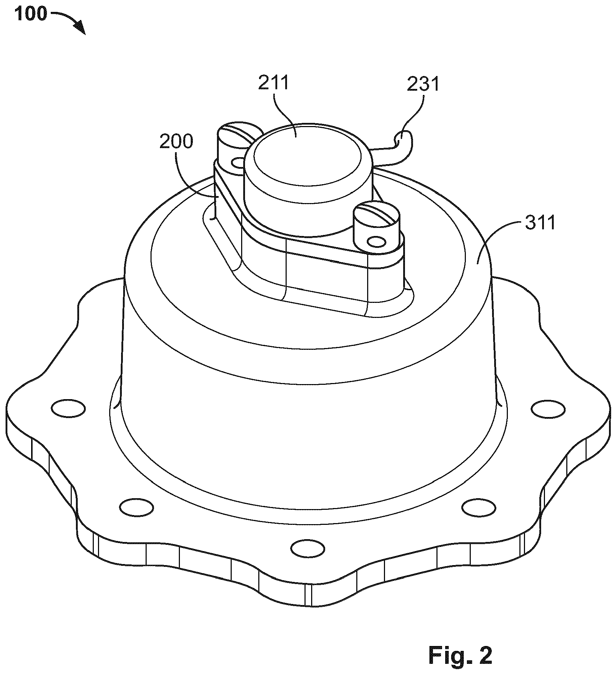

Fig. 2 shows a schematic perspective view of the encoder 100. As explained with respect to Fig. 1, the sensor casing 211 of the magnetic sensor 200 encompasses the first and second magnetic sensing elements 210, 220 arranged on the two opposing surfaces of a PCB 230. Furthermore, also a microprocessor, which may be referred to as a controller in the following, can be arranged inside the sensor casing 211. Alternatively, the controller may also be part of an external unit (not shown in the figures). An electrical lead 231 connects the magnetic sensor 200 to a higher level control unit, which is operable to control the fluid dispensing process, and to a power supply. Alternatively, a wireless communication interface and/or a battery for power supply can be provided at the magnetic sensor 200.

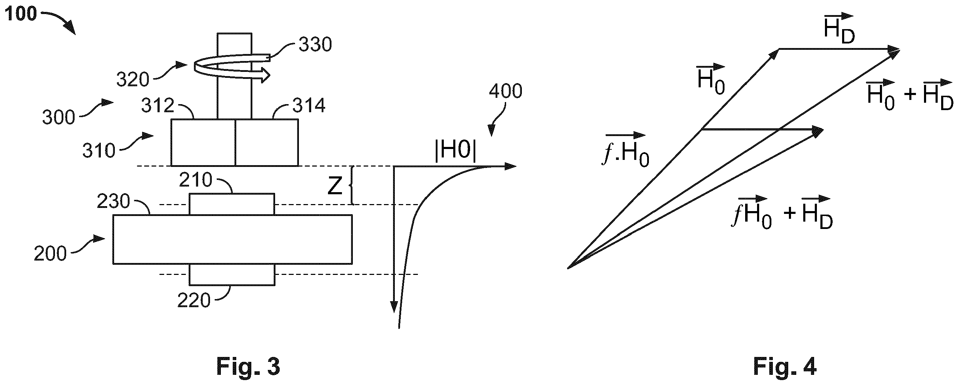

Figure 3 illustrates the encoder 100 again in a more schematic manner.

The resulting magnetic field $H_0$ is indicated by diagram 400. The absolute amount of the magnetic field $|H_0|$ of the permanent magnet is decreasing in the direction towards the first and second sensing element 210, 220.

If the distance z between the permanent magnet 310 and the magnetic sensor 200 becomes increasingly larger, the measured absolute value $|H_0|$ of the magnetic field falls under a threshold value. According to the present invention, an error code is output by the magnetic sensor if the measured absolute value $|H_0|$ is smaller than a predefined first threshold value. Consequently, tampering attempts where the magnetic sensor is removed from the housing 311 shown in Fig. 2, can be detected. Also in case that the air gap between the magnetic sensor 200 and the rotating permanent magnet 310 has become too large, the measured absolute value $|H_0|$ is smaller than a predefined first threshold value and the magnetic sensor 200 generates an error code.

For detecting such a magnet drop out which signifies a tamper attempt removing the magnetic sensor 200 from the fluid pump, the low field amplitude dependence of xMR sensors can be used. In particular, the amplitude $|H_0|$ can be estimated from a sine voltage $U_{sin}$ and a cosine voltage $U_{cos}$ as follows:

$$\frac{\sqrt{(U_{sin}^2 + U_{cos}^2)}}{U_{supply}} = \frac{\Delta R}{R} = f(|H_0|) \quad (5)$$

Now referring to Fig. 4, showing a vector diagram of the magnetic fields, the influence of an interfering disturbing magnetic stray field HD is shown. The vector $H_0$ indicates the magnetic field of the permanent magnet in the plane of the first sensing element. The vector $f \times H_0$ indicates the magnetic field of the permanent magnet in the plane of the second sensing element. The disturbing field is indicated by the vector HD. In particular, this diagram is based on the assumption that the distance between the assembly and the source of the disturbing field is greater than the dimensions of the assembly, in particular the distance between the permanent magnet and the second sensing element. Thus it can be assumed that the direction and the strength of the field of the disturbing source is homogeneous within the assembly. In general, this assumption holds true. However, if this assumption would not hold true, the strength of the disturbing field may be determined based on more advanced calculations.

By measuring the direction of the interfering field $f \times H_0$ +HD with the second sensing element and measuring the direction of the interfering field $H_0$ + HD with the first sensing element, the strength of the influence of the interfering field of the disturbing source on the measured field angles can be computed. In case the detected interfering magnetic field angle difference is larger than a predetermined second threshold, the magnetic sensor 200 can generate an error code indicating that a tampering attempt has been detected. Of course, also cases where an accidental influence of a high disturbing magnetic field occurs, can be detected. If the disturbing magnetic field is lower than the second threshold, a computational compensation of its influence can be performed, thus enhancing the accuracy of the measurement.

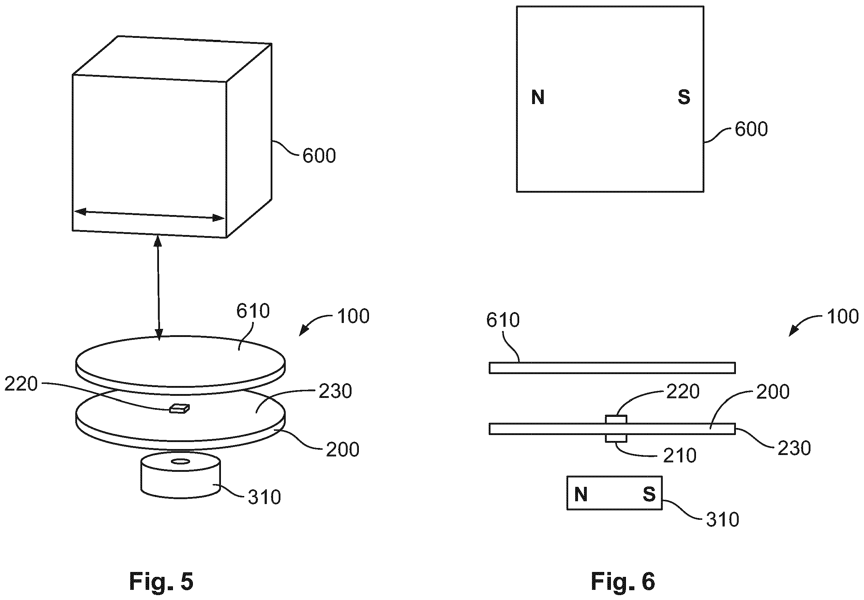

Fig. 5 and 6 illustrate the situation where a strong external permanent magnet 600 is brought close to the encoder arrangement 100 in a tampering intention. In addition to the compensation of disturbing fields explained above, and iron shield 610 can be arranged at the sensor casing to reduce the influence of an external magnet 600.

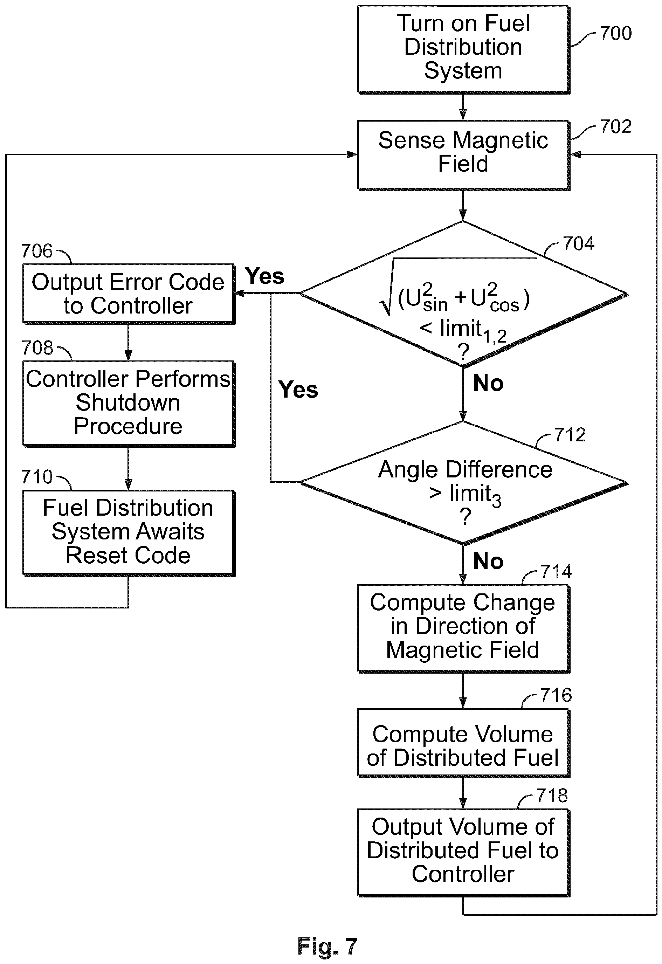

Fig. 7 illustrates in the form of a flow chart a fuel dispensing process using an exemplary encoder 100 as described herein. At step 700 the fuel distribution system is turned on. Turning on the fuel distribution system may provide power to components of the system, such as the encoder 100, a fuel pump, and a controller. At step 702, the magnetic sensor 200 senses the flux density and direction of the magnetic field generated by the permanent magnet 310 and outputs a signal indicative of these characteristics to a controller (also referred to as processor) arranged on the PCB 230. At step 704 the processor compares the absolute value of the measured magnetic field measured by the first magnetic sensing element to a first threshold value $limit_1$. Furthermore, the processor compares the absolute value of the measured magnetic field measured by the second magnetic sensing element to a second threshold value $limit_2$. If

the absolute value of the magnetic field is below the first and/or the second threshold value, this means that either the air gap is too large for a reasonable measurement, or that a tampering attempt has been made.

In any case, if in step 704 the processor on the PCB determines that the sensed flux density is below the first and/or the second threshold value, the process flow proceeds to step 706. At step 706, the processor outputs an error code to the fuel distribution system's controller, for example, by transmitting a signal over an encrypted RS-485 transmission line. At step 708, the controller receives the error code and performs a shutdown procedure. At step 710, the fuel distribution system remains shut off until an authorized user (e.g. a manager) types in a reset password or code. The reset password may be entered, for example, from a remote location such as from within the building. Upon entry of the reset password, the process flow returns to step 702 and resumes sensing the magnetic field.

If at step 704, the processor on the PCB determines that the sensed flux density is above the first and the second threshold value, in step 712 the processor determines whether an angle difference of the angles measured by the first and second magnetic sensing elements, respectively, is above a third threshold value $limit_3$. In case the angle difference is above the third threshold value, this result is indicative of a too large disturbing magnetic field.

Consequently, the process proceeds to step 706 as explained above. Alternatively, of course also a different error code can be output to the controller of the fuel distribution system.

If the comparison at step 712, however, determines that the angle difference is below the third threshold $limit_3$, the process flow proceeds to step 714. At step 714, the processor on the PCB computes the change in the direction of the magnetic field created by the permanent magnet corresponding to the rotation of the magnet with the shaft 320. At step 716, the processor on the PCB computes the amount of distributed fuel based on a predetermined calibration factor (i. e. a conversion factor correlating rotations of the shaft to the volume of distributed fuel). At step 718, the encoder outputs a signal indicative of the volume of distributed fuel to the controller via a transmission line. After step 718, the encoder returns to step 702 and again the magnetic sensor senses the magnetic field created by the permanent magnet.

The steps 702 through 718 may cycle (that is, repeat) periodically or aperiodically according to a clock associated with the PCB.

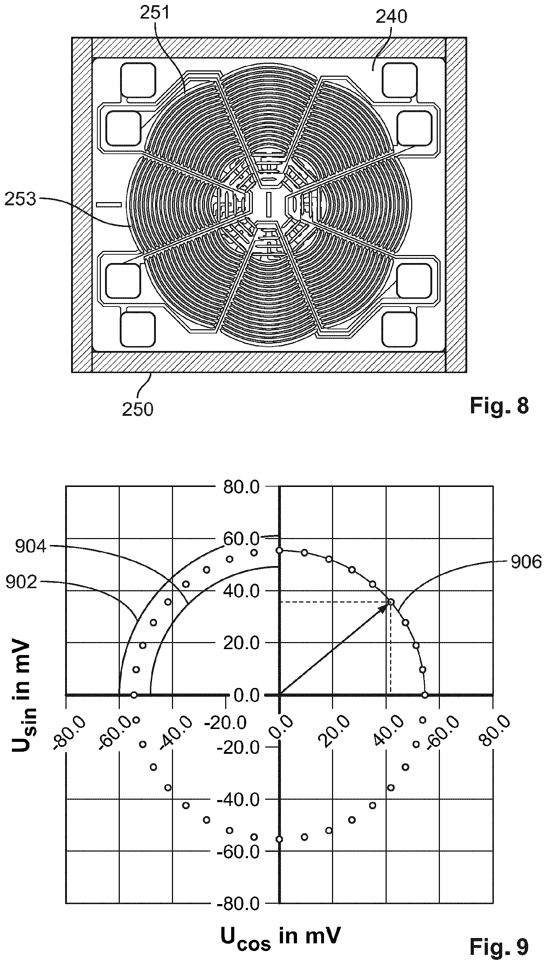

As an example, referring to Fig. 8, a schematic top view of an integrated circuit 240 comprising an AMR-sensing element 250 is shown. It is, however, clear that the principles according to the present invention can be realized with any kind of magnetic field sensor that at least measures the two field components in whose plane the magnetic field vector rotates.

According to one example, each of the first sensing element 210 and the second sensing element 220 is formed by the integrated circuit shown in Fig. 8, thereby forming a first die and a second die.

The sensing element 250 is arranged in one layer of the integrated circuit 240.

As shown in Fig. 8, the integrated circuit 240 may have a plurality of magnetoresistive leads that form magnetoresistive elements in the form of resistors 251, 253 as schematically indicated in the Figure. According to the exemplary embodiment of Fig. 8, the magnetoresistive elements are arranged in the shape of two full sensor bridges rotated against each other by 45°.

Magnetoresistive strips arranged in the layer form the resistors 251, 253. The magnetoresistive strips are connected forming conducting paths. Thus, the field direction of the permanent magnet can be measured.

In particular, each path meanders from a central portion of the integrated circuit to an external portion of the integrated circuit. The path is formed by longer parallel sections and shorter sections that are shorter that the longer sections. The shorter sections are generally extending in the direction from the central portion of the integrated circuit to the peripheral portion of the integrated circuit.

The first magnetoresistive bridge with the resistor 251 yields the output signal $U_{sin}$, whereas the second magnetoresistive bridge (having the resistor 253) generates the output signal $U_{cos}$. Fig. 9 illustrates a circle diagram of the measured amplitude 906 $f(|H_0|,T)$, which is a function of the temperature and the magnetic field strength. According to equation (5) above, the amplitude has to be constant. For determining the complete circle, only three measurements are needed to fit the circle by means of a linear regression process. A dynamic offset control can additionally be performed.

As indicated by the tolerance lines 902 and 904, the amplitude 906 has to lie within a predetermined range in order to guarantee an accurate measurement result. In particular, the measured amplitude 906 may not fall below the lower limit as indicated by line 904. Otherwise, it has to be assumed that the connection to the permanent magnet 310 has been lost.

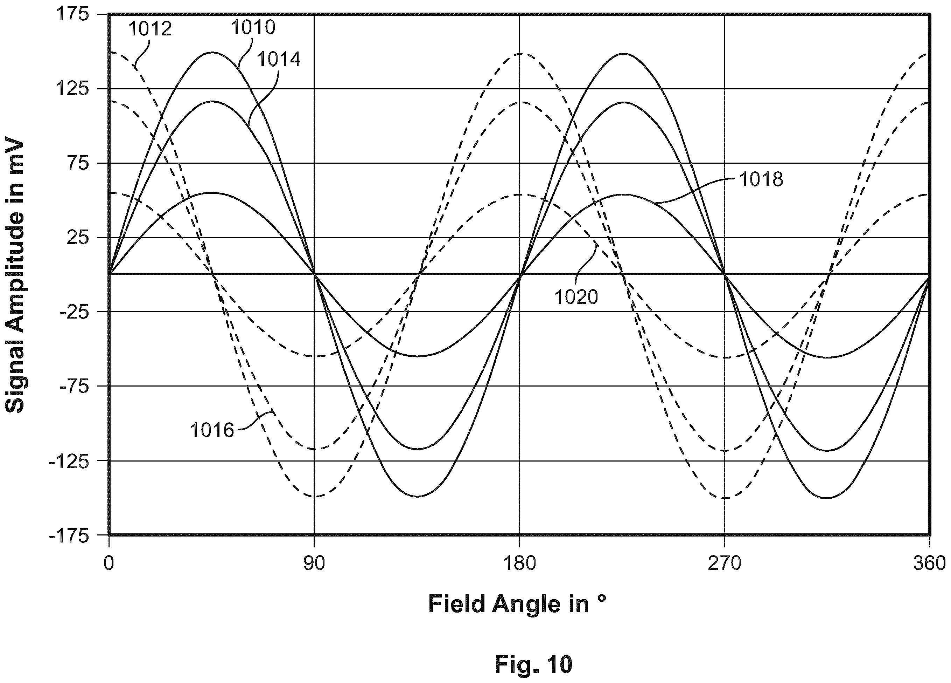

Fig. 10 illustrates the output signals of the magnetic sensing element formed by the integrated circuit 240 shown in Fig. 8. In particular, the signal amplitude is plotted against the field angle caused by the rotating permanent magnet. The measurement signals $U_{sin}$ and $U_{cos}$ are shown for different temperatures. As can be seen from this Figure, the maximum signal amplitude is significantly dependent on the temperature. In particular, curves 1010 and 1012 signify the measurement signals $U_{sin}$ and $U_{cos}$, respectively, at -40 °C. The curves 1014 and 1016 signify the measurement signals $U_{sin}$ and $U_{cos}$, respectively, at 25 °C. Further, the curves 1018 and 1020 signify the measurement signals $U_{sin}$ and $U_{cos}$, respectively, at +150 °C. Hence, determining that the measured amplitude remains within a predefined range, may also be used to monitor a range of admissible operational temperature. An additional temperature measurement may allow to calibrate either the sensor signals or the first and second thresholds for the actual sensor temperature.

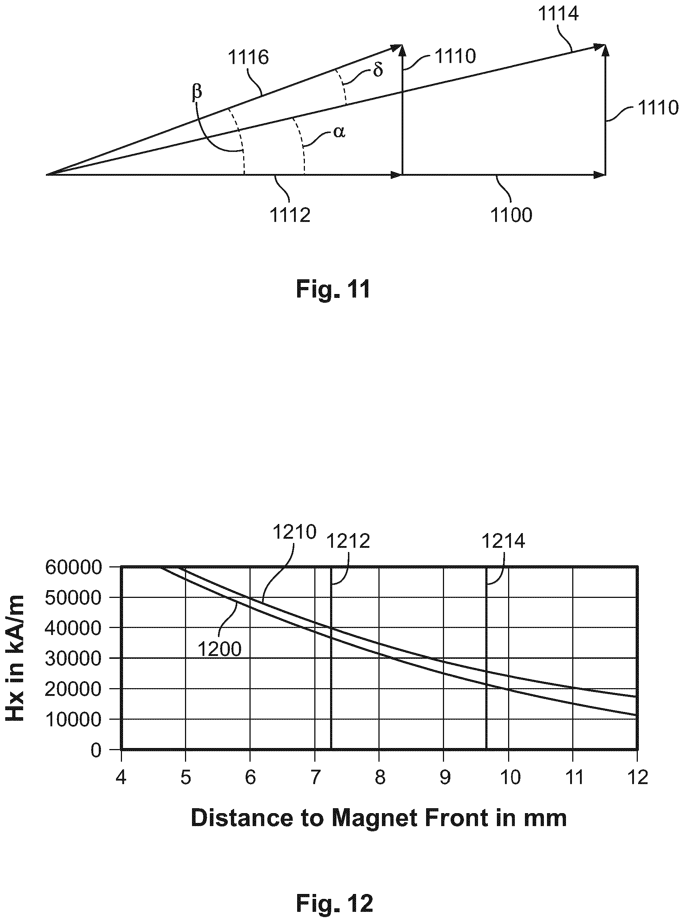

With reference to Fig. 11, the scheme of monitoring and compensating an external disturbing magnetic field will be explained in more detail.

Figure 11 illustrates as a vector diagram the relation between the measured angular directions of the two magnetic sensing elements 210, 220. Vector 1100 illustrates the undisturbed magnetic field direction at the first magnetic sensing element, whereas vector 1112 illustrates the undisturbed magnetic field direction at the second magnetic sensing element. In the undisturbed case, both magnetic sensing elements 210, 220 experience the same field direction 1100, 1112. However, under the influence of a disturbing magnetic field, which is indicated by the arrows 1110, the measured field at the first sensing element (vector 1114) is rotated differently compared to the field at the second sensing element (vector 1116).

The different angles $\alpha$ and $\beta$ lead to a measurable angular difference $\delta$ between the two sensing elements 210, 220. The undisturbed field angle can be re-calculated from the angle difference $\delta$ and a known ratio of the field strengths at the first and second magnetic sensing elements 210, 220. According to the present invention, an error signal is triggered if the angle difference $\delta$ exceeds a preset threshold value.

For calculating the undisturbed field angle, the curves shown in Fig. 12 indicating the magnetic field on axis depending on the distance to the permanent magnet can be used. In particular, curve 1200 shows the field with an iron shield 610 (see Fig. 5 and 6), while curve 1210 shows the field in case no shield 610 is present. Lines 1212 and 1214 indicate the position of the first and second magnetic sensing element, respectively.

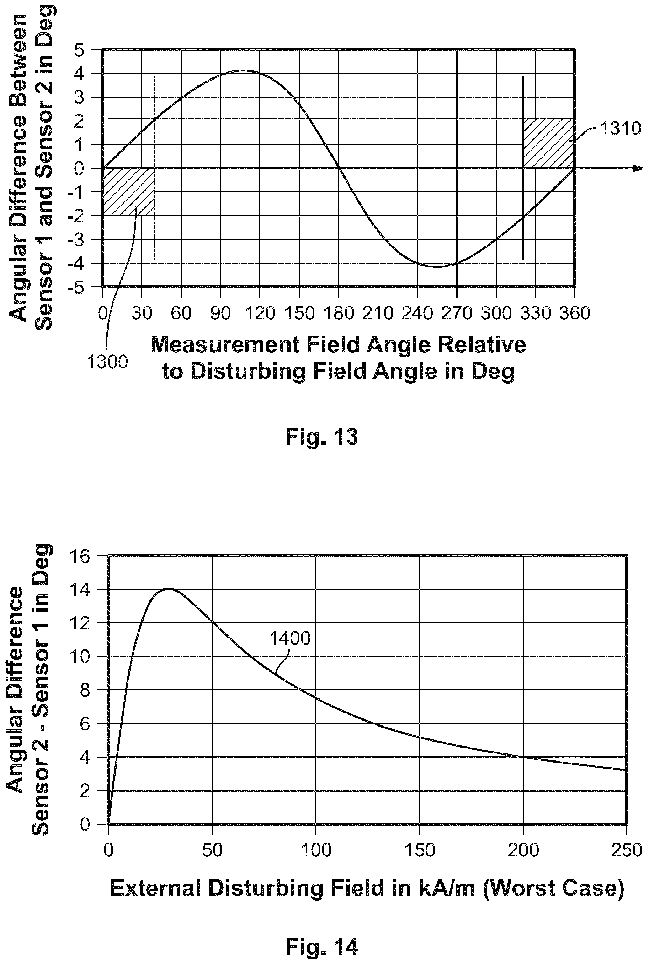

With reference to Fig. 13 and 14, the tampering detection and the setting of an error flag will be explained in more detail. In particular, Fig. 13 illustrates the angular difference $\delta$ (shown in Fig. 11) as a function of the measurement field angle relative to the disturbing field angle (in degrees). In particular, a 4 kA/m disturbing field in constant direction is present. As mentioned above, the difference between the signals of the first and second magnetic sensing elements 210, 220 contains the information on disturbing magnetic fields. However, disturbing fields which are parallel to the measurement field of the permanent magnet do not have any influence on the measurement. Therefore it is possible that an error flag indicating a tampering attack is not set immediately when starting the pump, but only after maximally 90° rotation, depending on the setting of the error flag.

These delay zones where the error flag is not instantly output to the controller of the fluid dispensing system are indicated in Fig. 13 by reference numerals 1300 and 1310. However, once the error flag has been set, only an authorized personnel should be able to reset the system so that not much fluid gets lost.

Furthermore, in theory extremely strong magnetic fields (H above 200 kA/m) would be able to force the fields at both magnetic sensing elements nearly parallel. In case an automatic reset of the error flag is provided as soon as the angular difference $\delta$ drops again below the second threshold value, this could lead to an undesired possibility of outmaneuvering the anti-tampering measure. However, by setting a sufficiently low threshold value (e. g. of 2 degrees), the tampering magnet would need an unreasonably high strength to overcome the inventive anti-tampering measure. Fig. 14 illustrates the angular difference (curve 1400) as a function of an applied external disturbing field. It can be seen that above an external field of 200 kA/m, the threshold value of 4 degrees would not be sufficient in case of an automatic reset. However, 2 degrees would be sufficiently low.

Furthermore, providing an additional magnetic shield renders it impossible to reach such high tampering fields with a reasonably large tampering magnet.

## REFERENCE NUMERALS

| Reference Numeral | Description |
| --- | --- |
| 100 | Encoder |
| 200 | Magnetic sensor |
| 210 | First magnetic sensing element |
| 211 | Sensor casing |
| 220 | Second magnetic sensing element |
| 230 | Circuit board, PCB |
| 231 | Sensor cable |
| 240 | Integrated circuit |

(continued)

| Reference Numeral | Description |
| --- | --- |
| 250 | Sensing element |
| 251, 253 | Resistor |
| 300 | Rotary member |
| 310 | Permanent magnet |
| 311 | Housing |
| 312 | Magnetic south pole |
| 314 | Magnetic north pole |
| 320 | Rotating shaft |
| 321 | Magnet holder |
| 322 | Axis of rotation |
| 330 | Arrow indicating rotation |
| 400 | Diagram indicating magnetic field $H_0$ |
| 600 | External permanent magnet |
| 610 | Iron shield |
| 700-718 | Method steps |
| 902, 904 | Tolerance margins |
| 906 | Amplitude |
| 1010-1020 | Signal amplitude curves |
| 1100-1116 | Field vectors |
| 1200-1214 | Magnetic field curves |
| 1300, 1310 | Delay zones |
| 1400 | Measurement curve for angular difference |

**Claims**

1. Encoder for a fluid dispensing system, the encoder (100) comprising:

a magnetic sensor (200) for detecting a rotational angle ($\omega$) of a rotary member (300) around an axis of rotation (322);
a magnet (310) for generating a magnetic field ($H_0$), the magnet (310) being arranged on the rotary member (300) so that the magnetic poles (312, 314) generate a magnetic field perpendicular to the axis (322) at the magnetic sensor about which the rotary member (300) rotates;
wherein the magnetic sensor (200) comprises at least a first and a second magnetic sensing element (210, 220), the first magnetic sensing element (210) configured to generate at least a first output signal, and the second magnetic sensing element (220) configured to generate at least one second output signal, wherein the output signals are indicative of a sensed magnetic field associated at least in part with the magnet, wherein the magnetic sensing elements (210, 220) and the magnet (310) are arranged at predetermined distances from one another centered on the axis of rotation (322);
a controller responsive to the first and second output signals and configured to generate an encoder signal indicative of the rotational angle ($\omega$);
wherein the controller is further configured to compare at least one of the first and second output signals to a first and second predetermined threshold value ($limit_1$, $limit_2$), respectively, associated with the predetermined distances, respectively, and to calculate field angles of the first and second output signals
wherein the controller is further configured to calculate a difference of the field angles sensed by the first and second magnetic field sensing elements, and to compare the difference with a third predetermined threshold value ($limit_3$), and

wherein the first and second predetermined threshold values ($limit_1$, $limit_2$) correspond to a minimal strength of the magnetic field sensed by the first and the second magnetic sensing elements, respectively, and

wherein the third predetermined threshold value (limits) is indicative of a maximum admissible external disturbing magnetic field acting on the first and the second magnetic sensing elements;

wherein the controller is further configured to generate an error signal if a result of at least one of the comparisons to one of the predetermined threshold values ($limit_1$, $limit_2$, $limit_3$) indicates a tamper attempt.

2. Encoder according to claim 1, wherein the encoder signal is a pulse signal indicative of the number of revolutions of the rotary member (300) around the axis of rotation (322).

3. Encoder according to claim 1 or 2, wherein the magnet (310) is configured to be mounted on a magnet holder (321) connected to the rotary member, wherein the magnet holder (321) is enclosed by a housing (311) which at least partly encompasses the rotary member.

4. Encoder according to one of the preceding claims, wherein the error signal is operative to disable the fluid dispensing system.

5. Encoder according to one of the preceding claims, wherein the magnet (310) comprises a diametrically or reversed axial or complex Halbach-type magnetized permanent magnet having the shape of a disc, block, or ring, and/or wherein geometric design elements are provided to homogenize the field at the sensor.

6. Encoder according to claim 5, wherein the permanent magnet (310) comprises a sintered and/or plastic bonded rare earth material, preferably NdFeB or SmCo, or a ferrite material.

7. Encoder according to one of the preceding claims, wherein the first and second magnetic sensing elements (210, 220) comprise magnetoresistive field angle sensors.

8. Method of operating an encoder for a fluid dispensing system, the method comprising the steps of:

sensing a magnetic field generated at least in part by a magnet (310) operatively associated with a rotatable output shaft of a fluid metering device with a magnetic sensor (200), the magnetic sensor (200) comprising at least a first and a second magnetic sensing element (210, 220), the first magnetic sensing element (210) configured to generate first output signal, and the second magnetic sensing element (220) configured to generate at least one second output signal, wherein the output signals are indicative of a sensed magnetic field associated at least in part with the magnet (310), wherein the magnetic sensing elements (210, 220) and the magnet (310) are arranged at predetermined distances from one another centered on the axis of rotation (322);

based on the first and second output signals, generating an encoder signal indicative of the rotational angle ($\omega$);

comparing at least one of the first and second output signals to a first and a second predetermined threshold value ($limit_1$, $limit_2$), respectively, associated with the predetermined distances, respectively, and to calculate field angles of the first and second output signals,

calculating a difference of the field angles sensed by the first and second magnetic field sensing elements, and comparing the difference with a third predetermined threshold value (limits);

wherein the first and second predetermined thresholds ($limit_1$, $limit_2$) correspond to a minimal strength of the magnetic field sensed by the first and the second magnetic sensing elements, respectively,

wherein a disturbing magnetic field sensed by the first and the second magnetic sensing elements (210, 220) is compensated calculatively, if the disturbing magnetic field is below the maximum admissible disturbing magnetic field,

generating an error signal if a result of at least one of the comparisons to the predetermined threshold values indicates a tamper attempt.

9. Method according to claim 8, wherein a disturbing magnetic field sensed by the first and the second magnetic sensing elements (210, 220) is compensated calculatively, if the disturbing magnetic field is below the maximum admissible disturbing magnetic field.

10. Method according to one of the claims 8 to 9, wherein the step of comparing at least one of the first and second output signals to the first and second predetermined threshold values (limit$_1$, limit$_2$) comprises calculating an amplitude of a sine and a cosine signal of at least one of the sensor elements as the square root of a sum of the squared sine and cosine signals, and comparing the amplitude to the predetermined threshold value.

11. Method according to one of the claims 8 to 10, wherein for each of the magnetic sensing elements a field angle is calculated as half the arctangent of a ratio of a sine and a cosine signal of the respective one of the sensor elements.


**Patentansprüche**

1. Kodierer für ein Flüssigkeits-Abgabesystem, wobei der Kodierer (100) umfasst:

   einen Magnetsensor (200) zum Erfassen eines Drehwinkels (w) eines Drehelementes (300) um eine Drehachse (322) herum;
   einen Magneten (310) zum Erzeugen eines Magnetfeldes eines Magnetfeldes (H$_0$), wobei der Magnet (310) so an dem Drehelement (300) angeordnet ist, dass die Magnetpole (312, 314) ein Magnetfeld senkrecht zu der Achse (310) an dem Magnetsensor erzeugen, um die sich das Drehelement (300) herum dreht;
   der Magnetsensor (200) wenigstens ein erstes und ein zweites Magnet-Erfassungselement (210, 220) umfasst, wobei das erste Magnet-Erfassungselement (210) so ausgeführt ist, dass es wenigstens ein erstes Ausgangssignal erzeugt, und das zweite Magnet-Erfassungselement (220) so ausgeführt ist, dass es wenigstens ein zweites Ausgangssignal erzeugt, wobei die Ausgangssignale ein erfasstes Magnetfeld anzeigen, das wenigstens teilweise mit dem Magneten zusammenhängt, und die Magnet-Erfassungselemente (210, 220) und der Magnet (310) in vorgegebenen Abständen zueinander auf der Drehachse (322) zentriert angeordnet sind;
   eine Steuerungseinrichtung, die auf das erste und das zweite Ausgangssignal anspricht und so ausgeführt ist, dass sie ein den Drehwinkel (w) anzeigendes Kodierer-Signal erzeugt;
   wobei die Steuerungseinrichtung des Weiteren so ausgeführt ist, dass sie das erste oder/und das zweite Ausgangssignal mit einem ersten bzw. einem zweiten vorgegebenen Schwellenwert (limit$_1$, limit$_2$) vergleicht, die jeweils mit den vorgegebenen Abständen zusammenhängen, und dass sie Feldwinkel des ersten und zweiten Ausgangssignals berechnet,
   die Steuerungseinrichtung des Weiteren so ausgeführt ist, dass sie eine Differenz der von dem ersten und dem zweiten Magnetfeld-Erfassungselement erfassten Feldwinkel berechnet, und die Differenz mit einem dritten vorgegebenen Schwellenwert (limits) vergleicht, und
   der erste sowie der zweite vorgegebene Schwellenwert (limit$_1$, limit$_2$) einer minimalen Stärke des von dem ersten bzw. dem zweiten Magnet-Erfassungselement erfassten Magnetfeldes entsprechen, und
   der dritte vorgegebene Schwellenwert (limits) ein maximal zulässiges externes magnetisches Störfeld anzeigt, das auf das erste und das zweite Magnet-Erfassungselement wirkt;
   wobei die Steuerungseinrichtung des Weiteren so ausgeführt ist, dass sie ein Fehler-Signal erzeugt, wenn ein Ergebnis wenigstens eines der Vergleiche mit einem der vorgegebenen Schwellenwerte (limit$_1$, limit$_2$, limit$_3$) einen Manipulationsversuch anzeigt.

2. Kodierer nach Anspruch 1, wobei das Kodierer-Signal ein Impulssignal ist, das die Anzahl von Umdrehungen des Drehelementes (300) um die Drehachse (322) herum anzeigt.

3. Kodierer nach Anspruch 1 oder 2, wobei der Magnet (310) so ausgeführt ist, dass er an einem mit dem Drehelement verbundenen Magnet-Halter (321) angebracht wird, wobei der Magnet-Halter (321) von einem Gehäuse (311) umschlossen ist, das das Drehelement wenigstens teilweise umgibt.

4. Kodierer nach einem der vorangehenden Ansprüche, wobei das Fehler-Signal Deaktivieren des Flüssigkeits-Abgabesystems bewirkt.

5. Kodierer nach einem der vorangehenden Ansprüche, wobei der Magnet (310) einen Permanentmagneten mit diametraler oder umgekehrt axialer oder komplexer Halbach-Magnetisierung in Form einer Scheibe, eines Blocks oder eines Rings umfasst und/oder geometrische Gestaltungselemente zum Homogenisieren des Feldes an dem Sensor vorhanden sind.

6. Kodierer nach Anspruch 5, wobei der Permanentmagnet (310) ein gesintertes und/oder kunststoffgebundenes Seltenerd-Material, vorzugsweise NdFeB oder SmCo, oder ein Ferritmaterial umfasst.

**7.** Kodierer nach einem der vorangehenden Ansprüche, wobei das erste und das zweite Magnet-Erfassungselement (210, 220) magnetoresistive Feldwinkel-Sensoren umfassen.

**8.** Verfahren zum Betreiben eines Kodierers für ein Flüssigkeits-Abgabesystem, wobei das Verfahren die folgenden Schritte umfasst:

Erfassen eines Magnetfeldes, das wenigstens teilweise von einem Magneten (310) erzeugt wird, der funktional mit einer drehbaren Ausgangswelle einer Flüssigkeits-Dosiervorrichtung zusammenhängt, mit einem Magnetsensor (200), wobei der Magnetsensor (200) wenigstens ein erstes und ein zweites Magnet-Erfassungselement (210, 220) umfasst, das erste Magnet-Erfassungselement (210) so ausgeführt ist, dass es ein erstes Ausgangssignal erzeugt, und das zweite Magnet-Erfassungselement (220) so ausgeführt ist, dass es wenigstens ein zweites Ausgangssignal erzeugt, wobei die Ausgangssignale ein erfasstes Magnetfeld anzeigen, das wenigstens teilweise mit dem Magneten (310) zusammenhängt, und die Magnet-Erfassungselemente (210, 220) und der Magnet (310) in vorgegebenen Abständen zueinander auf der Drehachse (322) zentriert angeordnet sind;
Erzeugen eines Kodierer-Signals, das den Drehwinkel (w) anzeigt, auf Basis des ersten und des zweiten Ausgangssignals;
Vergleichen des ersten oder/und des zweiten Ausgangssignals mit einem ersten bzw. einem zweiten vorgegebenen Schwellenwert ($limit_1$, $limit_2$), die jeweils mit den vorgegebenen Abständen zusammenhängen, und Berechnen von Feldwinkeln des ersten und des zweiten Ausgangssignals,
Berechnen einer Differenz zwischen den von dem ersten und dem zweiten Magnetfeld-Erfassungselement erfassten Feldwinkeln, und Vergleichen der Differenz mit einem dritten vorgegebenen Schwellenwert ($limit_3$), wobei der erste und der zweite vorgegebene Schwellenwert ($limit_i$, $limit_2$) einer minimalen Stärke des von dem ersten bzw. dem zweiten Magnet-Erfassungselement erfassten Magnetfeldes entsprechen,
wobei ein magnetisches Störfeld, das von dem ersten und dem zweiten Magnet-Erfassungselement (210, 220) erfasst wird, rechnerisch kompensiert wird, wenn das magnetische Störfeld unterhalb des maximal zulässigen magnetischen Störfeldes liegt,
Erzeugen eines Fehler-Signals, wenn ein Ergebnis wenigstens eines der Vergleiche mit den vorgegebenen Schwellenwerten einen Manipulationsversuch anzeigt.

**9.** Verfahren nach Anspruch 8, wobei ein magnetisches Störfeld, das von dem ersten und dem zweiten Magnet-Erfassungselement (210, 220) erfasst wird, rechnerisch kompensiert wird, wenn das magnetische Störfeld unterhalb des maximal zulässigen magnetischen Störfeldes liegt.

**10.** Verfahren nach einem der Ansprüche 8 bis 9, wobei der Schritt des Vergleichens des ersten oder/und des zweiten Ausgangssignals mit dem ersten und dem zweiten vorgegebenen Schwellenwert ($limit_1$, $limit_2$) Berechnen einer Amplitude eines Sinus- und eines Kosinus-Signals wenigstens eines der Erfassungselemente als die Quadratwurzel einer Summe der quadrierten Sinus- und Kosinus-Signale sowie Vergleichen der Amplitude mit dem vorgegebenen Schwellenwert umfasst.

**11.** Verfahren nach einem der Ansprüche 8 bis 10, wobei für jedes der Magnet-Erfassungselemente ein Feldwinkel als die Hälfte des Arkustangens eines Verhältnisses eines Sinus- und eines Cosinus-Signals des jeweiligen der Erfassungselemente berechnet wird.

## Revendications

**1.** Codeur pour un système de distribution de fluide, le codeur (100) comprenant :

un capteur magnétique (200) pour détecter un angle de rotation ($\omega$) d'un élément rotatif (300) autour d'un axe de rotation (322) ;
un aimant (310) pour générer un champ magnétique ($H_0$), l'aimant (310) étant disposé sur l'élément rotatif (300) de sorte que les pôles magnétiques (312, 314) génèrent un champ magnétique perpendiculaire à l'axe (322) au niveau du capteur magnétique autour duquel l'élément rotatif (300) tourne ;
dans lequel le capteur magnétique (200) comprend au moins un premier et un second élément de détection magnétique (210, 220), le premier élément de détection magnétique (210) étant configuré pour générer au moins un premier signal de sortie, et le second élément de détection magnétique (220) étant configuré pour générer au moins un second signal de sortie, les signaux de sortie étant indicatifs d'un champ magnétique détecté associé au moins en partie à l'aimant, dans lequel les éléments de détection magnétique (210, 220) et l'aimant (310) sont disposés à des distances prédéterminées les uns des autres centrés sur l'axe de rotation (322) ;

un dispositif de commande sensible aux premier et second signaux de sortie et configuré pour générer un signal de codeur indicatif de l'angle de rotation ($\omega$) ;

dans lequel le dispositif de commande est en outre configuré pour comparer au moins l'un des premier et second signaux de sortie à une première et une deuxième valeur de seuil prédéterminée ($limit_1$, $limit_2$), respectivement, associées aux distances prédéterminées, respectivement, et calculer des angles de champ des premier et second signaux de sortie,

dans lequel le dispositif de commande est en outre configuré pour calculer une différence des angles de champ détectés par les premier et second éléments de détection de champ magnétique, et pour comparer la différence avec une troisième valeur de seuil prédéterminée ($limit_3$), et

dans lequel les première et deuxième valeurs de seuil prédéterminées ($limit_1$, $limit_2$) correspondent à une intensité minimale du champ magnétique détecté par les premier et second éléments de détection magnétique, respectivement,

et

dans lequel la troisième valeur de seuil prédéterminée ($limit_3$) est indicative d'un champ magnétique perturbateur externe maximum admissible agissant sur les premier et second éléments de détection magnétique ;

dans lequel le dispositif de commande est en outre configuré pour générer un signal d'erreur si un résultat d'au moins l'une des comparaisons à l'une des valeurs de seuil prédéterminées ($limit_1$, $limit_2$, $limit_3$) indique une tentative de sabotage.

2. Codeur selon la revendication 1, dans lequel le signal de codeur est un signal impulsionnel indicatif du nombre de tours de l'élément rotatif (300) autour de l'axe de rotation (322).

3. Codeur selon la revendication 1 ou 2, dans lequel l'aimant (310) est configuré pour être monté sur un support d'aimant (321) relié à l'élément rotatif, dans lequel le support d'aimant (321) est enfermé par un boîtier (311) qui englobe au moins partiellement l'élément rotatif.

4. Codeur selon l'une des revendications précédentes, dans lequel le signal d'erreur est opérationnel pour désactiver le système de distribution de fluide.

5. Codeur selon l'une des revendications précédentes, dans lequel l'aimant (310) comprend un aimant permanent aimanté de type Halbach diamétralement ou inversé axial ou complexe ayant la forme d'un disque, d'un bloc, ou d'un anneau, et/ou dans lequel des éléments de conception géométrique sont prévus pour homogénéiser le champ au niveau du capteur.

6. Codeur selon la revendication 5, dans lequel l'aimant permanent (310) comprend un matériau de terres rares fritté et/ou lié à du plastique, de préférence NdFeB ou SmCo, ou un matériau de ferrite.

7. Codeur selon l'une des revendications précédentes, dans lequel les premier et second éléments de détection magnétique (210, 220) comprennent des capteurs d'angle de champ magnétorésistif.

8. Procédé de fonctionnement d'un codeur pour un système de distribution de fluide, le procédé comprenant les étapes consistant à :

détecter un champ magnétique généré au moins en partie par un aimant (310) associé de manière fonctionnelle à un arbre de sortie rotatif d'un dispositif de mesure de fluide avec un capteur magnétique (200), le capteur magnétique (200) comprenant au moins un premier et un second élément de détection magnétique (210, 220), le premier élément de détection magnétique (210) étant configuré pour générer un premier signal de sortie, et le second élément de détection magnétique (220) étant configuré pour générer au moins un second signal de sortie, dans lequel les signaux de sortie sont indicatifs d'un champ magnétique détecté associé au moins en partie à l'aimant (310), dans lequel les éléments de détection magnétique (210, 220) et l'aimant (310) sont disposés à des distances prédéterminées les uns des autres centrés sur l'axe de rotation (322) ;

sur la base des premier et second signaux de sortie, générer un signal de codeur indicatif de l'angle de rotation ($\omega$) ;

comparer au moins l'un des premier et second signaux de sortie à une première et une seconde valeur de seuil prédéterminée ($limit_1$, $limit_2$), respectivement, associées aux distances prédéterminées, respectivement, et pour calculer des angles de champ des premier et second signaux de sortie,

calculer une différence des angles de champ détectés par les premier et second éléments de détection de champ magnétique, et comparer la différence à une troisième valeur de seuil prédéterminée (limit$_3$) ;

dans lequel les premier et second seuils prédéterminés (limit$_1$, limit$_2$) correspondent à une intensité minimale du champ magnétique détecté par les premier et second éléments de détection magnétique, respectivement, dans lequel un champ magnétique perturbateur détecté par les premier et second éléments de détection magnétique (210, 220) est compensée par calcul, si le champ magnétique perturbateur est inférieur au champ magnétique perturbateur maximal admissible,

générer un signal d'erreur si un résultat d'au moins une des comparaisons avec les valeurs de seuil prédéterminées indique une tentative de sabotage.

9. Procédé selon la revendication 8, dans lequel un champ magnétique perturbateur détecté par les premier et second éléments de détection magnétique (210, 220) est compensé par calcul, si le champ magnétique perturbateur est inférieur au champ magnétique perturbateur maximal admissible.

10. Procédé selon l'une des revendications 8 à 9, dans lequel l'étape de comparaison d'au moins un des premier et second signaux de sortie aux première et deuxième valeurs de seuil prédéterminées (limit$_1$, limit$_2$) comprend le calcul d'une amplitude d'un signal sinus et cosinus d'au au moins un des éléments capteurs comme racine carrée d'une somme des signaux sinus et cosinus au carré, et la comparaison de l'amplitude à la valeur de seuil prédéterminée.

11. Procédé selon l'une des revendications 8 à 10, dans lequel pour chacun des éléments de détection magnétique, un angle de champ est calculé comme la moitié de l'arctangente d'un rapport d'un signal sinus et cosinus de l'un respectif des éléments capteurs.

**Fig. 1**

EP 3 929 537 B1

**Fig. 2**

Fig. 4

Fig. 3

Fig. 6

Fig. 5

```
                              ┌─────────────────────┐
                              │    Turn on Fuel     │ ⟋700
                              │   Distribution      │
                              │      System         │
                              └──────────┬──────────┘
                                         │
                              ┌──────────▼──────────┐
                              │   Sense Magnetic    │ ⟋702
         ┌───────────────────▶│      Field          │◀─────────────┐
         │                    └──────────┬──────────┘              │
         │                               │                         │
         │                            ╱──▼──╲  ⟋704                 │
         │     ┌──────────────┐     ╱         ╲                     │
         │     │ Output Error │ Yes╱ √(U²sin + U²cos) ╲             │
         │     │   Code       │◀──╱    < limit₁,₂       ╲            │
 706⟋    │     │ to Controller│   ╲         ?          ╱            │
         │     └──────┬───────┘     ╲               ╱               │
         │            │               ╲──────┬────╱                │
 708⟋    │     ┌──────▼───────┐   Yes        │ No                   │
         │     │  Controller  │              │                      │
         │     │  Performs    │           ╱──▼──╲ ⟋712              │
         │     │  Shutdown    │         ╱         ╲                 │
         │     │  Procedure   │       ╱  Angle Difference ╲         │
         │     └──────┬───────┘       ╲    > limit₃       ╱         │
 710⟋    │            │                 ╲      ?        ╱           │
         │     ┌──────▼───────┐           ╲──────┬────╱             │
         │     │     Fuel     │                  │ No  ⟋714         │
         │     │ Distribution │           ┌──────▼──────┐           │
         │     │ System Awaits│           │Compute Change│          │
         │     │ Reset Code   │           │ in Direction │          │
         │     └──────────────┘           │ of Magnetic  │          │
         │                                │   Field      │          │
         └────────────────────────────   └──────┬──────┘           │
                                                 │  ⟋716            │
                                          ┌──────▼──────┐           │
                                          │Compute Volume│          │
                                          │of Distributed│          │
                                          │    Fuel      │          │
                                          └──────┬──────┘           │
                                                 │  ⟋718            │
                                          ┌──────▼──────┐           │
                                          │Output Volume │          │
                                          │of Distributed│          │
                                          │ Fuel to      │──────────┘
                                          │ Controller   │
                                          └─────────────┘
```

**Turn on Fuel Distribution System** — 700

**Sense Magnetic Field** — 702

704: $\sqrt{(U_{sin}^2 + U_{cos}^2)} < limit_{1,2}$ ?

**Yes** → 706: **Output Error Code to Controller**

708: **Controller Performs Shutdown Procedure**

710: **Fuel Distribution System Awaits Reset Code**

**No** → 712: **Angle Difference > $limit_3$** ? — **Yes**

**No** → 714: **Compute Change in Direction of Magnetic Field**

716: **Compute Volume of Distributed Fuel**

718: **Output Volume of Distributed Fuel to Controller**

**Fig. 7**

251   240

253

250                                    **Fig. 8**

904
902

$U_{sin}$ in mV

906

$U_{cos}$ in mV                        **Fig. 9**

**Fig. 10**

**Fig. 11**

**Fig. 12**

Fig. 13

Fig. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011148399 A